# FASCICULE DE BREVET EUROPEEN

(11) **EP 0 440 564 B1**
(45) Date de publication et mention de la délivrance du brevet: **27.01.1993**
(21) Numéro de dépôt: 91400243.1
(22) Date de dépôt: 01.02.1991
(51) Int. Cl.: F16L 33/207

(54) **Dispositif de raccordement d'un tuyau souple sur un embout tubulaire rigide**
Vorrichtung zum Verbinden eines Schlauchendes mit dem Ende eines starren Rohres
Device for connecting a hose end to a rigid pipe end

(30) Priorité: 02.02.1990 FR 9001259
(43) Date de publication de la demande: 07.08.1991
(73) Titulaire: Etablissements CAILLAU, F-92130 Issy-les-Moulineaux (FR)
(72) Inventeur: Calmettes, Lionel, F-41200 Romorantin Lanthenay (FR); Detable, Pascal, F-41200 Romorantin Lanthenay (FR)
(74) Mandataire: Descourtieux, Philippe

(56) Documents cités:
- DE-A- 3 815 168
- DE-A- 3 914 645
- DE-B- 1 214 062
- FR-A- 1 434 683
- FR-A- 1 558 355

## Description

On connaît déjà, notamment par les brevets FR-A-1.558.355, DE-A-3.815. 168 et DE-A-3.914.645, un dispositif de raccordement d'un tuyau souple sur un embout tubulaire rigide, un tel dispositif comportant essentiellement un ensemble tubulaire rigide fixé de façon étanche à l'extrémité du tuyau souple, cet ensemble étant muni de moyens d'étanchéité et de moyens d'assemblage et/ou de verrouillage coopérant avec des éléments complémentraires de l'embout rigide. Plus précisément, l'ensemble tubulaire fixé à l'extrémité du tuyau souple comprend deux éléments tubulaires rigides et coaxiaux disposés respectivement à l'intérieur et à l'extérieur de l'extrémité du tuyau souple, destinée à recevoir l'embout rigide. Dans le cas plus particulier des brevets allemands précités, ces deux éléments tubulaires enserrent l'extrémité libre du tuyau souple en forme de bourrelet et assurent simultanément une étanchéité et une résistance mécanique de l'assemblage, grâce à des déformations radiales faisant apparaître, sur chacun des éléments tubulaires interne et externe, des portions cylindriques de diamètres différents. D'autre part, pour assurer l'étanchéité du raccordement, un joint torique, susceptible de venir en contact avec la pièce externe de l'embout rigide, est disposé dans un logement ménagé à la surface intérieure de l'élément tubuliare interne par sa portion de plus grand diamètre. Le logement est fermé, vers l'extérieur dans le sens axial, par une paroi annulaire radiale, reliée à l'élément tubulaire externe, dont le diamètre intérieur est sensiblement égal au diamètre intérieur de l'élément tubulaire interne. L'un au moins desdits éléments tubulaires comporte des moyens d'assemblage et/ou de verrouillage coopérant avec des moyens complémentaires prévus en correspondance sur l'embout rigide.

Les dispositifs de raccordement connus du genre en question présentent plusieurs inconvénients malgré leur efficacité.

D'une part, ils comportent des organes relativement lourds et/ou volumineux, quelquefois difficiles à mettre en place, qui en pratique empêchent leur utilisation pour certaines applications, notamment si le montage doit être effectué au moyen de machines telles que des robots, qui en général ne peuvent effectuer que des translations.

D'autre part, et en conséquence de ces premiers inconvénients, les dispositifs connus sont relativement onéreux, à la fois en raison de la nature ou de la structure des pièces qui les constituent et du temps nécessaire pour leur mise en place.

Enfin,notamment dans le cas des deux brevets allemands précités, l'assujettissement de l'ensemble tubulaire rigide sur l'extrémité du tuyau souple exige une déformation importante de ce dernier, en particulier pour faire apparaître, à l'intérieur dudit ensemble, le logement pour le joint d'étanchéité avec l'embout. Ces déformations peuvent entraîner un fluage du tuyau souple, très préjudiciable à la bonne tenue du dispositif.

On peut ici rappeler que dans le cas particulier des circuits hydrauliques de refroidissement pour les moteurs de véhicules, les tuyaux souples doivent être équipés, avant leur raccordement, de l'ensemble tubulaire destiné à être emmanché et fixé sur l'embout rigide; ce dernier fait lui-même généralement partie d'un appareil, tel qu'un échangeur de chaleur préalablement mis en place. L'opération d'assemblage du tuyau et de son ensemble tubulaire d'extrémité ainsi que l'opération de raccordement proprement dite doivent être aussi simples que possible et ne nécessiter qu'un nombre de pièces aussi petit que possible. En particulier, il convient d'éviter l'apport ou la manipulation de pièces dans la phase finale du raccordement.

Les nombreuses exigences techniques et commerciales qui viennent d'être rappelées ont conduit la demanderesse à rechercher un dispositif de raccordement d'un tuyau souple sur un embout rigide, du type décrit dans les brevets précités, qui en supprime les inconvénients tout en présentant divers avantages.

Selon l'invention les portions cylindriques de plus grand diamètre de l'élément tubulaire interne et de l'élément tubulaire externe (constituant ce que l'on a appelé "l'ensemble tubulaire" fixé à l'extrémité du tuyau souple), de préférence réalisés en tôle métallique mince, sont situés, dans le sens radial, en regard du bourrelet terminal du tuyau souple, cependant que la paroi annulaire radiale, fermant le logement du joint torique, est une pièce distincte de l'élément tubulaire interne.

Grâce à ces dispositions, la fixation étanche de "l'ensemble tubulaire" sur le tuyau souple n'exige pas une compression radiale importante de ce dernier tout en permettant la réalisation facile du logement du joint torique; ces opérations sont effectuées chez le fabricant, en même temps que la réalisation des moyens de verrouillage destinés à coopérer avec ceux prévus sur l'embout rigide. Ceux-ci seront, de préférence, du type décrit dans la demande de brevet européen de la demanderesse, ayant pour titre : "Dipositif de verrouillage de deux tubes coaxiaux" et publiée le 28 août 1991 sous le N°443.895.

Ainsi le raccordement du tuyau souple sur un embout rigide ne nécessite aucune pièce rapportée ni même aucune autre manipulation que le simple emmanchement de l'extrémité du tuyau souple sur l'embout rigide.

L'invention sera mieux comprise et diverses caractéristiques secondaires ainsi que ses avantages apparaîtront au cours de la description qui va suivre de quelques modes de réalisation en référence aux dessins annexés dans lesquels :
- La figure 1a et la figure 1b sont des vues extérieures, partiellement en coupe axiale, d'un dispositif de raccordement selon l'invention avant son assemblage
- La figure 2 est une vue analogue du dispositif après son assemblage
- La figure 3 est une vue à plus grande échelle d'un détail de montage de l'ensemble tubulaire d'extrémité du tuyau souple
- La figure 4 est une vue analogue à la figure 2 dans le cas d'une variante de réalisation

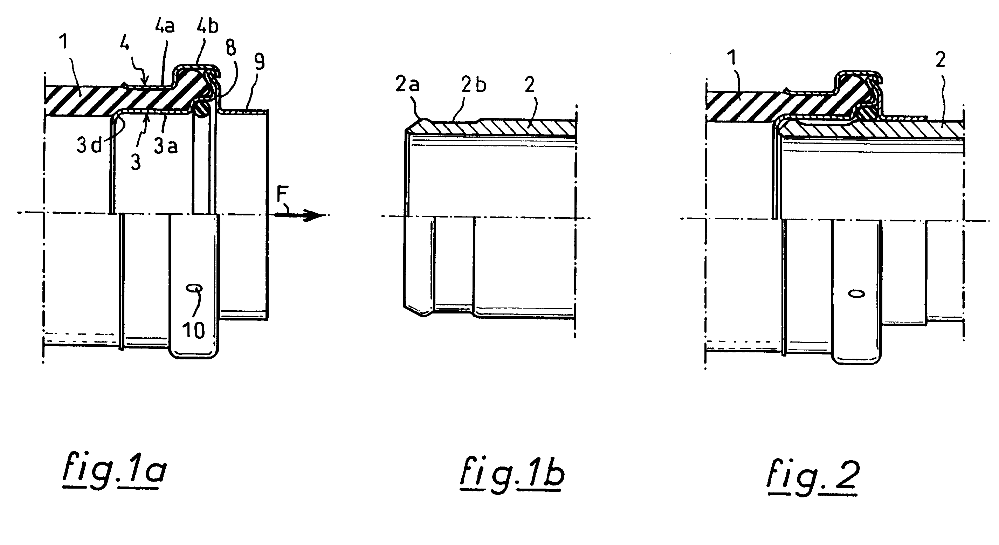

Si l'on se reporte tout d'abord aux figures 1 à 3, on voit un dispositif de raccordement d'un tuyau souple ***1***, par exemple en caoutchouc, et d'un embout rigide ***2***, par exemple en matière plastique. Dans ce qui suit on supposera que l'embout rigide est fixé sur un appareil qui ne peut être déplacé au moment du raccordement.

L'embout **2** est constitué par une pièce cylindrique dont l'extrémité libre présente, de façon connue, un bourrelet **2a** généralement suivi d'une gorge **2b** de faible profondeur.

L'extrémité libre du tuyau **1**, destinée à être emmanchée sur l'embout **2** est équipée d'un "ensemble tubulaire" constitué essentiellement par deux éléments tubulaires rigides **3** et **4**, coaxiaux et disposés respectivement à l'intérieur et à l'extérieur du tuyau. Ces deux éléments tubulaires assurent, dans des conditions que l'on va préciser un serrage mécanique convenable de l'extrémité du tuyau, qui se trouve ainsi rigidifiée ainsi qu'une étanchéité suffisante entre la paroi interne du tuyau et l'élément interne **3**.

Chacun des deux éléments **3** et **4** comporte deux portions cylindriques **3a**,**3b** et **4a**,**4b**, de diamètres différents, la portion de plus grand diamètre **3b**,**4b** étant située en regard de l'extrémité libre **1a** du tuyau. Au contraire les portions **3a**,**4a** de plus petit diamètre assurent le serrage radial de la paroi du tuyau et leurs diamètres sont respectivement au moins égal au diamètre interne du tuyau et au plus égal au diamètre externe de celui-ci. En outre le diamètre intérieur de la portion **3a** est sensiblement égal au diamètre extérieur du bourrelet **2a** de l'embout.

La portion **3b** de plus grand diamètre de l'élément tubulaire interne **3** constitue, vers l'intérieur, un logement **5** pour un joint torique **6** en matière souple appropriée, par exemple en élastomère, dont le diamètre intérieur à l'état libre, est quelque peu inférieur au diamètre extérieur de l'embout **2**. Cette portion **3b**, est, de préférence, reliée à une paroi radiale **3c** qui s'étend sensiblement jusqu'à la face interne de la portion de grand diamètre **4b** de l'élément tubulaire **4**.

D'autre part les deux portions **3b**,**4b** de grand diamètre des deux éléments tubulaires interne et externe délimitent entre elles avec la paroi radiale **3c**, une cavité **7**, ouverte vers la gauche des figures, emprisonnant l'extrémité libre **1a** du tuyau qui forme alors un bourrelet dont le diamètre est quelque peu supérieur à celui du tuyau. A cet égard on notera ici que la largeur minimale **1** du passage entre la cavité **7** et la zone annulaire définie par les deux portions cylindriques **3a** et **4a** est légèrement inférieure à l'épaisseur de cette zone annulaire.

Le logement **5** du joint **6** est fermé, vers l'extérieur dans le sens axial, par une paroi annulaire **8** dont le diamètre intérieur est sensiblement égal à celui de la portion cylindrique **3a**. De préférence, et comme on le voit bien sur les figures, la paroi radiale **8** est raccordée, dans la direction opposée au tuyau, à un manchon **9** dont le diamètre intérieur est, lui aussi, sensiblement égal au diamètre extérieur de l'embout **2**.

On notera enfin qu'à son extrémité interne l'élément tubulaire interne **3** présente un épaulement **3d** dirigé vers l'intérieur, susceptible de constituer une butée axiale pour l'embout dans des conditions qui seront précisées plus loin. De plus, au moins un trou **10** est prévu dans la portion **4b** de l'élément tubulaire externe **4** et débouche dans la cavité **7**.

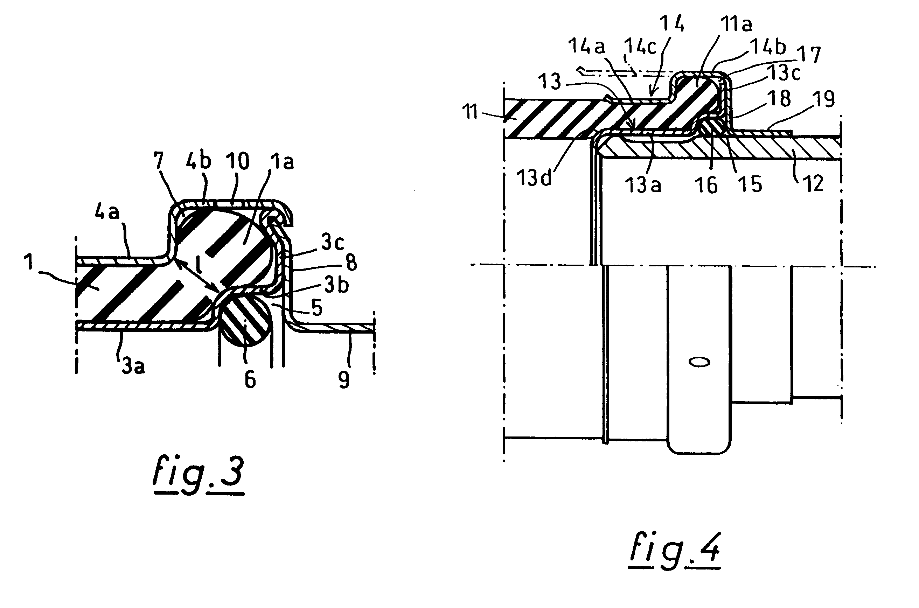

L'ensemble tubulaire d'extrémité du tuyau, qui vient d'être décrit d'une façon générale, peut être réalisé en tout matériau approprié. Toutefois ainsi qu'on le voit bien sur les figures, en particulier sur la figure 3, il est avantageux de le réaliser en tôle métallique mince, ce qui en facilite la fabrication et le montage et en limite le coût. De plus, ainsi qu'on s'en rend compte facilement, l'encombrement résultant du raccordement reste très faible et correspond seulement au diamètre extérieur de la portion **4b**.

Après avoir enfilé le tuyau **1** dans l'élément tubulaire externe **4**, jusqu'à ce que sa face terminale soit située dans la portion **4b** de grand diamètre, on emmanche l'élément tubulaire interne **3** dans des conditions connues, analogues à celles décrites, par exemple, par le brevet français A-1.434.683. De préférence, et comme on le voit bien sur la figure 3, la paroi radiale **8** solidaire de son manchon **9** a été préalablement sertie à la périphérie externe de la paroi radiale **3c** de l'élément tubulaire interne **3**.

Le bourrelet terminal **1a** du tuyau est alors emprisonné dans la cavité **7** et l'ensemble tubulaire d'extrémité du tuyau est terminé par le sertissage du bord libre de la portion **4b** sur la périphérie externe de la paroi radiale **8**. Le trou **10** permet de vérifier visuellement la présence du bourrelet **1a** dans la cavité **7**.

Des moyens complémentaires non représentés sont enfin prévus d'une part sur l'embout, d'autre part sur l'ensemble tubulaire, de préférence sur le manchon **9**, pour assurer la liaison mécanique des deux organes, dans le sens axial. De préférence ces moyens seront du type décrit et représentés dans la demande de brevet déposée ce jour par la demanderesse et ayant pour titre : "Dispositif de verrouillage de deux tubbes coaxiaux".

Bien évidemment l'homme de métier a déjà compris que le raccordement du tuyau sur l'embout s'effectue simplement en déplaçant l'ensemble tubulaire **3,4** et son tuyau **1** vers l'embout **2** dans le sens de la flèche **F** de la figure 1.

Au cours de cette opération, le manchon **9** facilite le guidage et le déplacement selon la flèche **F** se poursuit jusqu'à ce que l'extrémité du bourrelet **2a** vienne en butée sur l'épaulement **3d** de l'élément tubulaire interne **3**. Après le franchissement du bourrelet **2a**, par le joint torique **6**, l'effort nécessaire au déplacement selon la flèche **F** diminue brusquement en raison de la présence de la gorge **2b**. Quel que soit le moyen, manuel ou motorisé, utilisé pour le déplacement du tuyau, il acquiert alors une inertie qui facilite la mise en place jusqu'au contact de la butée **3d** sur le bourrelet **2a** et en conséquence la coopération, généralement automatique, des moyens de verrouillage non représentés de l'ensemble tubulaire et de l'embout. De toutes façons l'étanchéité du raccordement est assurée par le contact du joint **6** et de la surface extérieure de l'embout **2**, au-delà de la gorge **2b** (fig. 2).

Un tel dispositif de raccordement est particulièrement adapté au montage robotisé; il peut cependant être facilement mis en place, manuellement, par exemple s'il s'agit d'une pièce de rechange. Bien plus, dans cette dernière éventualité, la forme très connue de l'embout **2** et plus particulièrement la présence du bourrelet **2a** et de la gorge **2b** permettent d'emmancher directement un tuyau souple sur l'embout et de l'y maintenir par un collier de serrage connu.

Si l'on se reporte maintenant à la figure 4 on voit une variante de réalisation dans laquelle les éléments déjà décrits portent les mêmes références augmentée de 10. L'ensemble tubulaire d'extrémité du tuyau **11** , qui dans sa réalisation précédente comportait trois pièces **3,** **4** et **8** n'en comporte plus que deux désignées par les références **13** et **14**.

En fait la paroi annulaire radiale **18** fermant le logement **15** du joint **16** constitue une seule pièce avec l'élément tubulaire externe **14** et se raccorde directement à la portion de grand diamètre **14b**.

Le montage de l'ensemble tubulaire **13-14** est légèrement différent de celui qui a été décrit plus haut.

L'élément tubulaire interne **13**, convenablement formé avec son épaulement **13d** et sa paroi latérale **13c**, est tout d'abord emmanché dans l'extrémité libre du tuyau **11**.

L'élément tubulaire **14**, préalablement configuré pour faire apparaître la paroi radiale **18** et éventuellement le manchon **19**, comporte un prolongement cylindrique **14c** (représenté en trait ponctué) de ce qui deviendra sa portion de plus grand diamètre **14b**.

La douille cylindrique **14b**-**14c** est enfilée sur l'extrémité droite du tuyau **11** et vient coiffer le bourrelet **11a** jusqu'à ce que la paroi radiale **18** soit en appui sur l'élément tubulaire interne **13**.

Une opération de retreint diminue alors le diamètre de la portion **14c** de la douille et fait apparaître la portion **14a** de l'élément tubulaire externe en même temps que le bourrelet **11a** du tuyau est emprisonné dans la cavité **17** dans les conditions tout à fait analogues à celles qui ont été précisées plus haut.

Bien évidemment l'opération de raccordement du tuyau **11** sur l'embout **12** est effectuée de la même façon que celle décrite à propos de la première réalisation et présente les mêmes avantages.

## Revendications

1. Dispositif de raccordement entre un tuyau souple (***1***), par exemple en caoutchouc, tel notamment qu'un élément d'un circuit de refroidissement d'un véhicule, et un embout tubulaire rigide (***2***) destiné à être emmanché à l'intérieur du tuyau souple, ledit dispositif comportant :
- d'une part, deux éléments tubulaires, interne et externe, rigides et coaxiaux (***3,4***) disposés respectivement à l'intérieur et à l'extérieur de l'extrémité libre du tuyau souple, destinée à recevoir l'embout rigide, lesdits éléments tubulaires enserrant cette extrémité et présentant chacun, au contact du tuyau souple et au voisinage de son extrémité libre en forme de bourrelet terminal (***1**a***), deux portions cylindriques (***3**a***,***3**b*** ; ***4**a***,***4**b***) de diamètres différents,
- d'autre part, pour assurer l'étanchéité du raccordement, un joint torique (***6***) susceptible de venir en contact avec la surface extérieure de l'embout rigide et disposé dans un logement (***5***) ménagé à la surface intérieure de l'élément tubulaire interne (***3***) par sa portion de plus grand diamètre, ledit logement étant fermé, vers l'extérieur dans le sens axial, par une paroi radiale annulaire (***8***), fixée à l'élément tubulaire externe (***4***), dont le diamètre intérieur est sensiblement égal au diamètre intérieur de l'élément tubulaire interne (***3***),
caractérisé en ce que les portions cylindriques de plus grand diamètre (***3**b***,***4**b***) des éléments tubulaires sont situées, dans le sens radial, en regard du bourrelet terminal (***1**a***) du tuyau souple, et en ce que la paroi radiale (***8***) fermant le logement (***5***) est une pièce distincte de l'élément tubulaire interne (***3***).

2. Dispositif de raccordement selon la revendication 1, caractérisé en ce que la paroi radiale annulaire (***8***) fermant le logement (***5***) du joint torique est raccordée à un manchon cylindrique (***9***) dont le diamètre intérieur est voisin du diamètre intérieur de l'élément tubulaire interne (***3***), ledit manchon comportant des moyens de verrouillage coopérant avec des moyens complémentaires prévus en correspondance sur l'embout rigide.

3. Dispositif de raccordement selon la revendication 1, caractérisé en ce que la paroi radiale annulaire (***8***) est clipsée sur des crochets ou analogues prévus en correspondance sur la périphérie de l'extrémité libre (***4**b***) de l'élément tubulaire externe (***4***).

4. Dispositif de raccordement selon la revendication 1, caractérisé en ce que la paroi radiale (***18***) constitue une seule pièce, convenablement formée, avec l'élément tubulaire externe (***14***).

5. Dispositif de raccordement selon la revendication 1, caractérisé en ce que l'élément tubulaire externe (***4***) présente dans sa portion (***4**b***) de plus grand diamètre, au moins un trou (***10***) permettant d'apercevoir l'extrémité libre du tuyau souple.

6. Dispositif de raccordement selon l'une quelconque des revendications précédentes, caractérisé en ce que l'un au moins des éléments tubulaires (***3,4***) est réalisé en tôle métallique mince.

7. Dispositif de raccordement selon l'une quelconque des revendications 1 à 5, caractérisé en ce que la paroi radiale (***8,18***) du logement (***5,15***) est réalisée en tôle métallique mince.

8. Dispositif de raccordement selon la revendication 1, caractérisé en ce que l'extrémité interne de l'élément tubulaire interne (***3***) comporte une butée axiale (***3**d***) pour l'embout rigide (***2***).

## Patentansprüche

1. Verbindungsvorrichtung zwischen einem Schlauch (1), beispielsweise aus Gummi, wie insbesondere einem Element eines Kühlkreises eines Fahrzeugs, und einem in den Schlauch einzusteckenden starren Rohrstück (2), welche Vorrichtung umfaßt:
- einerseits zwei starre und koaxiale rohrförmige Elemente (3, 4), nämlich ein inneres und ein äußeres, die innerhalb bzw. außerhalb des freien Endes des Schlauchs, das zur Aufnahme des starren Rohrstücks dient, angeordnet sind, welche rohrförmigen Elemente dieses Ende umspannen und jeweils zwei Zylinderabschnitte (3a, 3b; 4a, 4b) unterschiedlicher Durchmesser in Kontakt mit dem Schlauch und nahe seinem freien, einen Endwulst (1a) bildenden Ende aufweisen,
- anderseits zur Gewährleistung der Dichtheit der Verbindung eine O-Ringdichtung (6), die mit der Außenfläche des starren Rohrstücks in Kontakt gelangen kann und in einer an der Innenfläche des inneren rohrförmigen Elements (3) im Abschnitt größeren Durchmessers vorgesehenen Aufnahme (5) angeordnet ist, welche Aufnahme in axialer Richtung nach außen durch eine radiale Ringwand (8) geschlossen ist, welche am äußeren rohrförmigen Element (4) befestigt ist, deren Innendurchmesser im wesentlichen gleich dem Innendurchmesser des inneren rohrförmigen Elements (3) ist,
dadruch gekennzeichnet, daß die Zylinderabschnitte größeren Durchmessers (3b, 4b) der rohrförmigen Elemente in radialer Richtung gegen den Endwulst (1a) des Schlauchs gerichtet sind, und daß die die Aufnahme (5) schließende radiale Wand (8) ein vom inneren rohrförmigen Element (3) getrenntes Stück ist.

2. Verbindungsvorrichtung nach Anspruch 1, dadurch gekennzeichnet, daß die die Aufnahme (5) der O-Ringdichtung schließende radiale Ringwand (8) an einer Zylindermuffe (9) angebracht ist, deren Innendurchmesser etwa gleich dem Innendurchmesser des inneren rohrförmigen Elements (3) ist, welche Muffe Verriegelungsmittel aufweist, die mit entsprechend am starren Rohrstück vorgesehenen komplementären Mitteln zusammenwirken.

3. Verbindungsvorrichtung nach Anspruch 1, dadurch gekennzeichnet, daß die radiale Ringwand (8) auf entsprechend am Umfang des freien Endes (4b) des äußeren rohrförmigen Elements (4) vorgesehenen Haken od. dgl. geklipst ist.

4. Verbindungsvorrichtung nach Anspruch 1, dadurch gekennzeichnet, daß die radiale Wand (18) ein zweckmäßig mit dem äußeren rohrförmigen Element (14) geformtes einziges Stück ist.

5. Verbindungsvorrichtung nach Anspruch 1, dadurch gekennzeichnet, daß das äußere rohrförmige Element (4) in seinem Abschnitt (4b) größeren Durchmessers mindestens ein Loch (10) zur Wahrnehmung des freien Endes des Schlauchs aufweist.

6. Verbindungsvorrichtung nach einem der vorhergehenden Ansprüche, dadurch gekennzeichnet, daß mindestens eines der rohrförmigen Elemente (3, 4) aus dünnem Metallblech hergestellt ist.

7. Verbindungsvorrichtung nach einem der Ansprüche 1 bis 5, dadurch gekennzeichnet, daß die radiale Wand (8, 18) der Aufnahme (5, 15) aus dünnem Metallblech hergestellt ist.

8. Verbindungsvorrichtung nach Anspruch 1, dadurch gekennzeichnet, daß das innere Ende des inneren rohrförmigen Elements (3) einen axialen Anschlag (3d) für das starre Rohrstück (2) aufweist.

## Claims

1. Connecting device between a hose (1), for example a rubber hose, such as in particular an element from a vehicle cooling circuit, and a rigid tubular endpiece (2) designed to be fitted in said hose, said device comprising:
- on the one hand, two internal and external tubular elements (3, 4), which are rigid and coaxial, and disposed respectively inside and outside the free end of the hose, and designed to receive the rigid endpiece, said tubular elements clamping said end and being each one provided, in contact with the hose and close to its free end shaped as an end bead (1a), two cylindrical portions (3a,3b ; 4a,4b) of different diameters,
- on the other hand, to ensure tightness of the connection, an O-ring (6) adapted to come into contact with the external surface of the rigid endpiece and placed in a housing (5) provided in the internal surface of the internal tubular element (3) by its portion of greater diameter, said housing being closed, towards the outside in axial direction, via an annular radial wall (8), which wall is fixed to the external tubular element (4), the internal diameter of which is substantially equal to the internal diameter of the internal tubular element(3),
characterized in that the cylindrical portions of larger diameter (3b,4b) of the tubular elements are situated, in radial direction, opposite the end bead (1a) of the hose, and in that the radial wall (8) closing the housing (5) is a part which is separate from the internal tubular element (3).

2. Connecting device according to claim 1, characterized in that the annular radial wall (8) which closes the housing (5) of the O-ring is connected to a cylindrical sleeve (9), the internal diameter of which is close to the internal diameter of the internal tubular element (3), said sleeve comprising locking means co-operating with complementary means provided in correspondence with the rigid endpiece.

3. Connecting device according to claim 1, characterized in that the annular radial wall (8) is clipped on hooks or the like which are provided in correspondence with the periphery of the free end (4b) of the external tubular element (4).

4. Connecting device according to claim 1, characterized in that the radial wall (18) forms one piece suitably shaped with the external tubular element (14).

5. Connecting device according to claim 1, characterized in that the external tubular element (4) has in its larger diameter portion (4b) at least one hole (10) which makes it possible to see the free end of the hose.

6. Connecting device according to any one of the preceding claims, characterized in that at least one of the tubular elements (3,4) is made in sheet metal.

7. Connecting device according to one of claims 1 to 5, characterized in that the radial wall (8,18) of the housing (5,15) is made in sheet metal.

8. Connecting device according to claim 1, characterized in that the internal end of the internal tubular element (3) comprises an axial abutment (3d) for the rigid endpiece (2).
